Europäisches Patentamt

European Patent Office

Office européen des brevets

(19)

(11) Numéro de publication: **0 326 453**
**A1**

(12)
# DEMANDE DE BREVET EUROPEEN

(21) Numéro de dépôt: **89400107.2**

(22) Date de dépôt: **12.01.89**

(51) Int. Cl.⁴: **G 21 C 9/00**
**A 62 C 3/06**

(30) Priorité: **29.01.88 FR 8801068**

(43) Date de publication de la demande:
**02.08.89 Bulletin 89/31**

(84) Etats contractants désignés: **BE DE GB IT NL**

(71) Demandeur: **NOVATOME**
**Tour Fiat 1, place de la Coupole**
**F-92400 - Courbevoie (FR)**

(72) Inventeur: **Daviot, Jean**
**Leyrieu**
**F-38460 Cremieu (FR)**

(74) Mandataire: **Bouget, Lucien et al**
**Cabinet Lavoix 2, Place d'Estienne d'Orves**
**F-75441 Paris Cédex 09 (FR)**

(54) **Procédé et dispositif de protection d'une structure contre un déversement de métal liquide chaud et fortement réducteur.**

(57) On recouvre la structure (1) dans au moins une zone exposée au déversement du métal liquide, par un matériau (4) réfractaire et inerte vis-à-vis du métal liquide, sous forme alvéolaire et dont les alvéoles (5) communiquent entre eux pour constituer un volume de recueil de métal liquide dans lequel la combustion est inhibée par confinement. La couche de matériau de protection peut être constituée par un lit de billes ou granulés dont la granulométrie est comprise entre 5 et 50 mm. Le taux de vide du matériau peut être compris entre 20 et 70 %. Les billes peuvent être de préférence en alumine. L'invention peut être appliquée à la protection de la dalle de fermeture de la cuve d'un réacteur nucléaire à neutrons rapides.

EP 0 326 453 A1

## Description

**Procédé et dispositif de protection d'une structure contre un déversement de métal liquide chaud et fortement réducteur**

L'invention concerne un procédé et un dispositif de protection d'une structure contre un déversement de métal liquide chaud et fortement réducteur tel que du sodium ou un autre métal alcalin, assurant l'extinction d'un feu du métal liquide susceptible de se déclarer au contact d'un gaz comburant.

Certains métaux, en particulier des métaux alcalins tels que le sodium et le potassium ou leur mélange, sont couramment utilisés à l'état fondu comme fluides caloporteurs par suite de leurs excellentes propriétés de conductivité thermique. En particulier, dans le domaine de l'industrie nucléaire, on utilise le sodium fondu comme fluide caloporteur primaire et secondaire, dans les réacteurs nucléaires à neutrons rapides.

Certains métaux liquides chauds, en particulier les métaux alcalins et alcalino-terreux sont extrêmement réducteurs et donc avides d'oxygène et sont susceptibles de s'enflammer spontanément au contact de l'air. Dans le cas où de tels métaux fortement réducteurs sont utilisés comme fluides caloporteurs dans une installation telle qu'on réacteur nucléaire, la mise en contact accidentelle du métal caloporteur avec un gaz comburant tel que l'air ambiant peut avoir des conséquences dommageables pour l'installation et pour l'environnement, du fait de la chaleur dégagée par le feu de métal liquide engendré au contact de l'air et des produits de la combustion, par exemple les oxydes qui sont susceptibles de se répandre dans l'installation et dans une zone environnante.

Le plus souvent, l'installation comporte des réservoirs et des canalisations dans lesquels le métal liquide est contenu et éventuellement, circule.

La présence de tels réservoirs ou canalisations au-dessus d'une structure de l'installation, par exemple au-dessus de la dalle fermant le cuve de réacteur, dans le cas d'un réacteur nucléaire à neutrons rapides de type intégré, entraîne certains risques pour cette structure, dans la mesure où une rupture accidentelle du réservoir ou de la canalisation, bien que fortement improbable, ne soit pas totalement à exclure.

Un tel déversement accidentel de métal liquide chaud, par exemple du sodium, sur une structure telle que la dalle du réacteur s'accompagne des effets suivants :

1 - Effet de choc thermique par contact du métal liquide chaud et bon conducteur avec la surface de la structure à une température très différente,

2 - Effet thermique dû à l'élévation de température de la structure sous l'effet de la chaleur dégagée par le feu de métal liquide venant en contact avec l'air ambiant, cet effet pouvant être d'une ampleur suffisante pour compromettre le fonctionnement de l'installation,

3 - Effet chimique dû à l'action immédiate ou à plus long terme, du métal liquide ou des produits de réaction tels que les oxydes, les hydroxydes ou autres composés chimiques formés lors de sa combustion.

On a donc cherché, en particulier dans les réacteurs à neutrons rapides, à protéger l'installation et l'environnement contre les effets d'une fuite importante ou d'un déversement de métal liquide d'origine accidentelle.

On a par exemple proposé de placer sur la ou les structures exposées une couche de matière calorifuge résistant à l'action du métal liquide chaud. Ce-pendant, cette technique de protection est entièrement passive et ne permet pas de lutter contre le feu de métal liquide.

On a également proposé d'éteindre le feu en le recouvrant d'une couche d'une poudre en un matériau résistant au métal liquide chaud. De telles poudres sont par exemple connues et vendues sous les dénominations commerciales "Marcalina" et "Graphex".

On a également proposé de piéger le métal liquide dans des caissons en tôle pratiquement fermés constituant des bacs étouffoirs pour la combustion. Ces bacs peuvent être par exemple remplis de barres métalliques comme décrit dans le brevet Français 2.185.153 déposé le 18 Mai 1972 par le Commissariat à l'Energie Atomique.

Les procédés décrits ci-dessus qui permettent de limiter ou d'étouffer le feu de métal liquide ne permettent cependant pas d'éviter les effets thermiques ou chimiques de la fuite de métal liquide.

Le but de l'invention est donc le proposer un procédé de protection d'une structure contre un déversement de métal liquide chaud et fortement réducteur et d'extinction d'un feu de métal liquide qui permette d'éviter à la fois les effets thermiques et chimiques du déversement et qui soit d'une mise en oeuvre simple.

Dans ce but, on recouvre la structure dans au moins une zone exposée au déversement du métal liquide, par un matériau réfractaire et inerte vis-à-vis du métal liquide, sous forme alvéolaire et dont les alvéoles communiquent entre eux pour constituer un volume de recueil du métal liquide dans lequel la combustion du métal liquide est inhibée par confinement et manque de gaz comburant.

L'invention est également relative à un dispositif de protection que peut être réalisé de manière avantageuse, sous la forme d'un lit de billes.

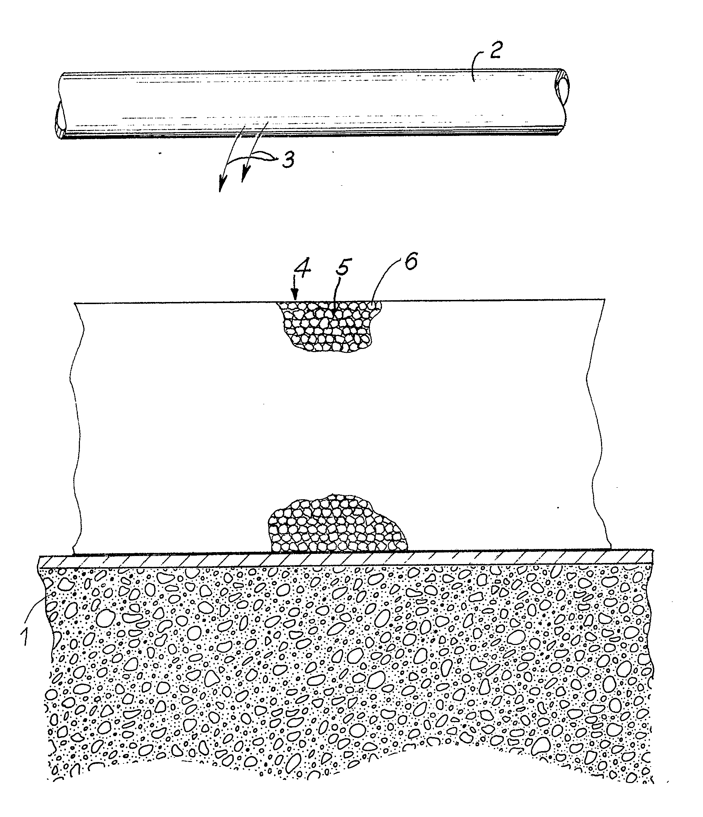

Afin de bien faire comprendre l'invention, on va maintenant décrire à titre d'exemple non limitatif en se référant à la figure jointe en annexe, un mode de mise en oeuvre du procédé suivant l'invention, dans le cas où la structure est une dalle de fermeture de la cuve d'un réacteur nucléaire à neutrons rapides de type intégré.

La figure unique représente une vue en coupe d'une partie de la dalle d'un réacteur nucléaire à neutrons rapides exposée à un déversement de sodium et recouverte par un lit de billes de protection suivant l'invention.

Sur la figure unique, on voit une partie de la dalle 1 d'un réacteur nucléaire à neutrons rapides de type intégré qui est constituée par une structure en acier et en béton, en forme de caisson.

La dalle des réacteurs nucléaires à neutrons rapides de type intégré, dans leur conception actuelle, présente une épaisseur qui peut atteindre trois mètres dans certaines zones et une surface totale de l'ordre de cent mètres carrés. Au-dessus de cette dalle sont disposées des tuyauteries dans lesquelles circule du sodium chaud, telles que la tuyauterie 2 représentée sur la figure.

Dans le cas où la tuyauterie 2 subit une rupture accidentelle, du sodium liquide chaud circulant dans cette tuyauterie est susceptible de se déverser sur la surface supérieure de la dalle 1 (flèches 3). Dans le cas d'une tuyauterie canalisant un fort débit de sodium et d'une rupture importante, de très grandes quantités de métal liquide sont suscepti bles d'être déversées sur la dalle en un temps très court. La dalle dont la surface supérieure est à une température voisine de 120° subit un choc thermique du fait que le sodium est à une température qui peut être de l'ordre de 500°C. D'autre part, le sodium s'enflamme spontanément au contact de l'air ambiant et le feu de sodium produit des contraintes thermiques de très grande amplitude dans la dalle qui est susceptible de se déformer et de se fissurer. Enfin, le feu de sodium est susceptible de mettre en danger l'environnement du réacteur, en particulier à cause de la production d'oxydes agressifs chimiquement et d'une grande toxicité qui sont susceptibles de se répandre dans le bâtiment du réacteur et dans le zone environnante.

Le procédé de protection suivant l'invention est mis en oeuvre en constituant une couche 4 de matériau réfractaire inerte chimiquement vis-à-vis du sodium liquide et présentant une structure alvéolaire telle que les différents alvéoles 5 du matériau communiquent entre eux, de façon à laisser un libre passage pour le sodium liquide déversé sur la surface supérieure de la couche 4 recouvrant la dalle 1. De cette façon, le sodium liquide pénètre très rapidement dans la couche 4 et se répartit dans l'ensemble du volume continu constitué par les alvéoles 5 juxtaposés.

Suivant un mode de réalisation préférentiel représenté sur la figure, la couche 4 est constituée par un lit de billes en alumine non poreuse déposée sur la surface supérieure de la dalle 1, sur une épaisseur de l'ordre de 50 à 60 cm, cette couche pouvant présenter une épaisseur accrue dans les zones particulièrement exposées à un déversement de sodium accidentel.

Les billes d'alumine 6 constituant la couche 4 sont approximativement sphériques et présentent une granulométrie moyenne de l'ordre de 20 mm.

Ces billes présentent cependant des irrégularités de forme et un spectre de dimensions telles que le taux de vide, c'est-à-dire le rapport du volume total des alvéoles 5 au volume de la couche 4 soit de l'ordre de 50 %.

De cette manière, en cas de rupture de la canalisation 2 s'accompagnant d'une fuite de sodium à grand débit, le sodium est absorbé très rapidement par la couche 4 dans laquelle il vient remplir les alvéoles communiquants 5. Le sodium chaud vient ainsi en contact avec les billes d'alumine, c'est-à-dire avec une masse importante d'un matériau à forte densité et possédant une forte capacité calorifique. La couche de billes d'alumine 4 permet donc d'absorber très rapidement une grande quantité de calories et de refroidir ainsi le sodium liquide déversé. Lorsque le sodium arrive au contact de la surface supérieure de la dalle 1, il est donc considérablement refroidi si bien qu'on évite le choc thermique entre la surface de la dalle à une température de l'ordre de 120°C et le sodium à une température de l'ordre de 500°C. La température du lit de billes avant le déversement de sodium est en équilibre avec la température de la surface supérieure de la dalle et s'établit à une valeur voisine de 120°C. Du fait de la forte capacité calorifique des billes d'alumine, la température du lit protecteur disposé sur la dalle 1 s'élève à un niveau relativement modéré. D'autre part, la faible conductivité thermique des billes et le refroidissement progressif du sodium lors de sa descente dans la couche 4 entraîne une élévation faible de la température du lit au contact avec la dalle 1.

Le lit de billes doit donc être constitué d'un matériau dense, sans porosité, réfractaire, inerte chimiquement vis-à-vis du sodium et à forte capacité calorifique.

L'air occupant à l'origine les alvéoles 5 est rapidement chassé lors du déversement du sodium et lors de sa progression dans la couche 4, une partie de cet air provoquant une oxydation ou combustion limitée du sodium. Le feu de sodium n'est pas susceptible de se développer du fait que le sodium est en contact avec une atmosphère confinée qui est très rapidement exempte d'oxygène, à l'intérieur des alvéoles 5.

Les effets thermiques du déversement de sodium sont ainsi fortement limités, du fait que le feu ne peut se déclarer ou se maintenir de façon significative au-dessus de la dalle du réacteur. De même, la formation d'oxydes ou d'autres espèces chimiques qui peuvent être corrosives est pratiquement évitée du fait que la combustion ne se développe pas. L'abaissement rapide de la température du sodium liquide chaud évite également la formation et la propagation de vapeur métallique toxique.

Lorsque le déversement de sodium a cessé, le sodium liquide contenu dans le lit de billes 4 se refroidit au contact de l'atmosphère extérieure et finit par se solidifier, si bien que l'ensemble de la couche 4 est pris en masse.

Après refroidissement complet du sodium, il est possible de démanteler la couche de billes renfermant le sodium, par exemple en réalisant une fracturation et un morcellement de celle-ci en blocs démontables, grâce à un outillage approprié. Le sodium refroidi n'adhère pas sur la couche supérieure de la dalle en acier et le démontage de la couche 4 remplie de sodium refroidi peut être effectué sans endommager la dalle.

Pour réaliser la protection d'une dalle de réacteur nucléaire à neutrons rapides de type intégré dont la surface est voisine de 100 m$^2$, on a utilisé une couche de billes d'alumine 4 d'une épaisseur comprise entre 50 et 60 cm qui est suffisante pour absorber 22 m³ de sodium. Cette protection permet de faire face aux ruptures prévisibles les plus importantes pouvant survenir sur le circuit de sodium disposé au-dessus de la dalle.

De plus, après un déversement accidentel de sodium, la couche peut être facilement démantelée et remplacée.

Dans le cas où un feu de sodium se développe dans le métal non encore absorbé par la couche 4, cette couche 4 réalise une protection thermique suffisante de la dalle pour que celle-ci ne subisse pas les effets thermiques du feu de sodium.

On va maintenant décrire deux exemples de réalisation de procédé suivant l'invention, dans un cadre expérimental reproduisant sensiblement les conditions rencontrées, dans une zone de la couche de protection 4 de la dalle 1 d'un réacteur, comme représenté sur la figure.

Exemple 1 :

Dans un récipient cylindrique calorifugé de diamètre 100 mm, rempli sur une hauteur de 650 mm par des billes d'alumine de granulométrie comprise entre 5 et 10 mm et préchauffées jusqu'à 80°C, on a versé en 40 secondes 2,4 Kg de sodium liquide porté à une température de 550°C.

Les billes d'alumine de forme plus ou moins régulière sont constituées par le produit vendu sous la dénomination commerciale "Cristalba", par la Socié té SOFREM. Ces billes constituent un lit présentant un taux de vide de 40 %.

L'absorption du sodium dans le lit de billes s'est effectuée en dix minutes ; pendant ce temps, un feu de sodium en nappe s'est développé de façon très limitée avant de s'éteindre naturellement après absorption complète du métal liquide. Malgré ce feu de sodium, la température du fond du récipient simulant la paroi supérieure en acier au carbone de la dalle d'un réacteur nucléaire à neutrons rapides est restée inférieure à 120°C, ce qui correspond à une protection parfaite de cette paroi supérieure.

Aucune dégradation significative de la paroi en acier au carbone du récipient n'a été décelée lors de l'examen du dispositif d'essai effectué trente jours après cet essai.

Exemple 2 :

Dans un récipient cylindrique calorifugé d'un diamètre de 300 mm, rempli sur une hauteur de 500 mm par un lit de billes d'alumine "Cristalba" de granulométrie 15 à 30 mm, présentant un taux de vide supérieur à 50 %, on a versé en une minute 13 Kg de sodium liquide porté à 550°, le fond du récipient en acier au carbone étant préchauffé à 120°C.

L'absorption du sodium dans le lit de billes s'est effectuée en 60 secondes. Le feu de sodium s'est éteint dès que le sodium a été absorbé par le lit de billes.

La température du fond du récipient simulant la paroi supérieure en acier au carbone de la dalle d'un réacteur à neutrons rapides est restée inférieure à 150°C alors que la température en surface de la couche de billes a atteint 720°C pendant les quelques instants où le feu de sodium a été actif.

Après refroidissement, l'agglomérat formé par le sodium et les billes a été fragmenté et désagrégé sans difficulté. L'adhérence sur les parois en acier au carbone du récipient était nulle. Il n'y a eu aucune reprise du feu. Aucune dégradation significative de la structure en acier au carbone n'a été décelée lors du démantèlement du dispositif d'essai effectué quinze jours après cet essai.

On voit donc que le procédé suivant l'invention est facile à mettre en oeuvre et d'une grande efficacité, dans la mesure où il permet d'éviter le développement d'un feu de métal liquide. D'autre part, même dans le case où un feu de métal liquide se développe avant que ce métal soit complètement absorbé par la matière alvéolaire, cette matière assure une protection de la structure contre les effets thermiques du feu, si bien que la structure garde ses caractéristiques dimensionnelles et fonctionnelles.

La remise en état de la structure après un déversement accidentel de métal liquide est très facile à réaliser. L'agglomérat formé peut être facilement fragmenté et éliminé par des moyens simples, sans aucun risque de reprise de feu.

L'invention ne se limite pas aux modes de réalisation qui ont été décrits.

C'est ainsi que le matériau alvéolaire peut être réalisé sous une forme différente d'un lit de billes et que ce matériau alvéolaire peut présenter un taux de vide différent de ceux qui ont été indiqués dans le cas de lits de billes. Cependant, ce taux de vide doit toujours être compris entre 20 et 70 % pour qu'on puisse obtenir une absorption rapide et efficace du métal liquide et simultanément, une capacité calorifique suffisante pour assurer un refroidissement notable du métal liquide.

Dans le cas où utilise un matériau sous forme de billes ou de granulés pour constituer la couche de protection, l'échelle de granulométrie de ce matériau peut être facilement adaptée de façon à favoriser soit l'absorption rapide du métal liquide, soit l'absorption de la chaleur de ce métal liquide.

Dans tous les cas cependant, le matériau sous forme de billes ou de granulés présentera une granulométrie comprise entre 5 et 50 mm.

Le matériau peut être disposé directement en vrac sur la structure à protéger. Il peut être également contenu dans des enveloppes suffisamment perméables au métal liquide pour maintenir une bonne absorption. Ce conditionnement du produit granulaire sous forme de paquets de dimensions choisies permet de faciliter sa manutention et également sa mise en place sur la structure, la couche de matériau de protection étant alors réalisée par juxtaposition des paquets. L'enveloppe perméable entourant le matériau granulaire peut être réalisée à partir de fils métalliques tels que des fils d'acier et constituée par exemple par une toile métallique en fils d'acier inoxydable.

Il est également possible d'imaginer l'utilisation de matériaux sous forme de plaques ou de blocs de dimensions variables pour réaliser la couche de protection. Dans ce cas le matériau est un matériau alvéolaire dont les alvéoles sont communiquants et dont la capacité calorifique est importante.

Il est également possible de revêtir ou d'imprégner la surface des billes ou granulés constituant la couche de protection de la structure par un matériau dégageant un gaz non comburant tel que le gaz carbonique ou l'azote, au contact du métal liquide chaud, de façon à favoriser l'étouffement de feu de sodium, dans les alvéoles du matériau de protection.

Enfin, le procédé et le dispositif de protection suivant l'invention peuvent être utilisés dans des applications différentes des réacteurs nucléaires à neutrons rapides et dans tous les cas où des métaux liquides fortement réducteurs risquent de se déverser sur une structure et entraîner des dégradations de cette structure.

## Revendications

1.- Procédé de protection d'une structure contre un déversement de métal liquide chaud et fortement réducteur et d'extinction d'un feu de métal liquide, caractérisé par le fait qu'on recouvre la structure (1) dans au moins une zone exposée au déversement du métal liquide, par un matériau (4) réfractaire et inerte vis-à-vis du métal liquide, sous forme alvéolaire et dont les alvéoles communiquent entre eux pour constituer un volume de recueil du métal liquide (3) dans lequel la combustion du métal liquide est inhibée par confinement et manque de gaz comburant.

2.- Procédé de protection suivant la revendication 1, caractérisé par le fait que le volume total des alvéoles du matériau (4) est sensiblement égal au volume total de métal liquide susceptible de se dé verser.

3.- Procédé de protection suivant l'une quelconque des revendications 1 et 2, caractérisé par le fait que le matériau (4) présente un taux de vide compris entre 20 et 70 %, ce taux de vide correspondant au rapport du volume des alvéoles (5) du matériau (4) au volume total du matériau recouvrant la dalle (1).

4.- Dispositif de protection d'une structure (1) contre un déversement de métal liquide chaud et fortement réducteur et d'extinction d'un feu de métal liquide caractérisé par le fait qu'il est constitué par une couche de protection (4) recouvrant la structure (1) dans au moins une zone exposée au déversement de métal liquide et constituée par un matériau réfractaire et inerte vis-à-vis du métal liquide, sous forme alvéolaire et dont les alvéoles (5) communiquent entre eux pour constituer un volume de recueil du métal li quide dans lequel la combustion du métal liquide est inhibée par confinement et manque de gaz comburant.

5.- Dispositif de protection suivant la revendication 4, caractérisé par le fait que la couche de protection est constituée par un lit de billes ou granulés ménageant entre eux des alvéoles communiquants (5).

6.- Dispositif suivant la revendication 5, caractérisé par le fait que le matériau est constitué par des billes d'alumine homogènes et non poreuses dont la granulométrie est comprise entre 5 et 50 mm, le taux de vide, c'est-à-dire le rapport du volume des alvéoles (5) communiquants au volume du lit de billes étant compris entre 20 et 70 %.

7.- Dispositif suivant l'une quelconque des revendications 5 et 6, caractérisé par le fait que le lit de billes ou de granulés est constitué par une couche des billes ou granulés répandus en vrac sur la structure (1) à protéger.

8.- Dispositif suivant l'une quelconque des revendications 5 et 6, caractérisé par le fait que le lit de billes ou de granulés est constitué par des paquets juxtaposés constitués chacun par une enveloppe perméable au métal liquide renfermant les billes ou granulés.

9.- Dispositif de protection suivant la revendication 8, caractérisé par le fait que les enveloppes perméables au métal liquide sont constituées par des toiles en fils métalliques.

10.- Procédé de protection suivant l'une quelconque des revendications 1 à 3, caractérisé par le fait qu'après le recueil et la solidification du métal liquide dans les alvéoles (5) du matériau (4), on réalise le démantèlement de la couche de matériau aggloméré obtenue par fragmentation mécanique.

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-4 102 739  (SAYRE) <br> * Colonne 2, lignes 10-25,46-51; colonne 3, lignes 13-16,35-45; figure * <br> --- | 1,4,6 | G 21 C    9/00 <br> A 62 C    3/06 |
| A | DE-A-2 822 271  (COMITATO NAZIONALE PER L' ENERGIA NUCLEARE) <br> * Page 10, lignes 10-26; figure 4 * <br> --- | 1,4,8 | |
| A,D | FR-A-2 185 153  (CEA) <br> ----- | | |

**DOMAINES TECHNIQUES RECHERCHES (Int. Cl.4)**

G 21 C    9
G 21 C    11
A 62 C    1
A 62 C    3

Le présent rapport a été établi pour toutes les revendications

| Lieu de la recherche | Date d'achèvement de la recherche | Examinateur |
|---|---|---|
| LA HAYE | 20-04-1989 | JANDL F. |